# EUROPEAN PATENT APPLICATION

(11) **EP 1 650 725 A1**
(43) Date of publication of application: **26.04.2006**
(21) Application number: 04770848.2
(22) Date of filing: 21.07.2004
(51) Int. Cl.: G08G 1/16, B60R 21/00

(54) **SAFE MOVEMENT SUPPORT DEVICE**

(30) Priority: 30.07.2003 JP 2003203494
(71) Applicant: Olympus Corporation, Tokyo 151-0072 (JP)
(72) Inventor: MIYOSI, Takashi, c/o OLYMPUS CORPORATION, Kanagawa 240-0216 (JP); IWAKI, Hidekazu, c/o OLYMPUS CORPORATION, Tokyo 193-0832 (JP); ARAI, Kazuhiko, c/o OLYMPUS CORPORATION, Tokyo 192-0154 (JP)
(74) Representative: von Hellfeld, Axel
(86) International application number: PCT/JP2004/010338
(87) International publication number: WO 2005/013236

(57) **Abstract**

A safe movement support apparatus includes an environmental three-dimensional information acquisition unit 1 for acquiring environmental three-dimensional information corresponding to a state of an actual object within a virtual space surrounding a moving body or an assumed movement track relating the moving body with a prescribed finite expanse; a moving body state information acquisition unit 2 for acquiring moving body state information relating to the moving body; and a safe movement-enabled space calculation unit 3 for calculating a safe movement-enabled space which is a virtual space with a finite expanse in which the moving body is presumed to be movable safely, based on the environmental three dimensional information obtained from the environmental three-dimensional information acquisition unit and moving body state information obtained from the moving body state information acquisition unit.

## Description

### Technical Field

The present invention relates to a safe movement support apparatus for supporting vehicles and other moving objects to move or run safely.

### Background Art

A vehicle-use preventive safety apparatus has already been proposed to detect an obstacle by monitoring a driving area of a vehicle and figure out a degree of risk caused by the obstacle based on a speed and running direction of the vehicle, thereby notifying the driver of a risk of accident such as a contact or collision. The apparatus according to this proposal asserts an evaluation, judgment and process of degree of risk about a plurality of risk objects in existence nearby the vehicle by considering a size, category, possible future action, driving state of respective driver, et cetera, of the objects, thereby securing the safety relative to running the vehicle. It has also disclosed to let drive environment output means indicate, as extracted data, an obstacle rating in proportion with the size of the obstacle on the actual space coordinates corresponding to the driving road surface ahead, set a distribution of risk factors on the actual space coordinates according to the driving state of the vehicle, and obtain a bi-dimensional distribution of degree of risk based on the extracted data and risk factors, thereby making it possible to evaluate degrees of risk inmultiple directions simultaneously even if a plurality of vehicles are running nearby at the same time; and to assert that the safety is improved because sizes of obstacles are also considered in the evaluation of degree of risk (refer to a patent document 1).

Also disclosed is a vehicle-use outside vehicle monitor apparatus for enabling a detection of side wall, as a continuous three-dimensional object for forming a border of road, such as guard rail, shrubbery and pylon; and a detection of existence, position and orientation of a side wall in a form of data to be processed easily. A use of such data accomplishes functions of a higher level alarm of risk and avoidance of accident, according to the assertion of the disclosure (refer to a patent document 2).

Another disclosed technique is to figure out a distribution of distances across an entire image from a displacement of corresponding positions in a pair of stereo images of an object outside the vehicle based on the principle of triangulation; calculate a three-dimensional position of each part of the photographic subject corresponding to the information about the distribution of distances; detect a plurality of three-dimensional objects by using the information about the calculated three-dimensional position; and figure out the proximate distance, as gap distance, between an edge of each of the detected plurality of three-dimensional objects, i.e., the edge facing the vehicle, and extended line of the side thereof for each of the left and right sides, thereby notifying the driver of the information about the figured out gap distances on the left and right sides. This proposal asserts a sure detection of various three-dimensional objects existing in the driving direction and notification of the driver of the gap distance from the vehicle before the vehicle passes through a narrow path, thereby lightening a load off the driver and hence securing the safety. Also disclosed as an example display for warning the driver according to a detection result, that is, a degree of risk, is to display a red warning light on the applicable side where a continuous driving as is will cause a contact, a yellow warning light on the applicable side where an improper steering by the driver will cause a risk of contact if there is the gap distance with an obstacle larger than zero and smaller than about twenty centimeters, and a green light on the applicable side for showing there is enough low risk of contact by a continuous driving as is if there is a gap distance of about twenty centimeters or greater (refer to a patent document 3).

Another proposal for approximately the same purpose as described above is about a vehicle-use obstacle detection apparatus for enabling a detection of obstacle in front of the vehicle and, at the same time, an automatic judgment as to whether or not the vehicle is able to pass through the obstacle safely. This proposal has disclosed the contents of setting up a spatial frame at a prescribed distance in front of the vehicle required for it to pass through within the screen imaged forward of the vehicle; setting up windows, which becomes areas as subject of comparison, in a plurality of prescribed places within the spatial frame; detecting the distance to an object captured by the applicable window; judging a possibility of the vehicle passing through on the road surface at the prescribed distance ahead based on the result of detecting the distance; and warning the driver if the judgment result shows that the vehicle cannot pass through. If a shorter distance than the prescribed distance in front of the vehicle is detected by way of the above described window within the spatial frame, the judgment is that the vehicle cannot pass through. That is, the proposal is to detect an obstacle in front of the vehicle, judge automatically whether or not the vehicle is able to pass through while avoiding the obstacle at the same time and notify of an inability of passing through if it is the case (refer to a patent document 4).

Yet another disclosed proposal is a collision preventive apparatus for attempting to prevent a collision securely by evaluating accurately and quickly a possibility of collision with a plurality of vehicles or obstacles existing in the driving direction of the vehicle. This proposal has disclosed the contents of extracting a white line on the actual road separately by using three-dimensional positional information which is stored in a memory and of modifying and/or changing a parameter of the built-in road model so as to match with the actual road shape, thereby recognizing the road shape; estimating a driving path of the vehicle based on the information about a steering angle and vehicle speed; and reflecting a general characteristic of driver depending on the driving speed to the area of driving path accurately, thereby judging a natural risk of collision better matching that of natural driving, through a use of microprocessor (refer to a patent document 5).

The above described conventionally proposed techniques all focus on a recognition of obstacle and avoidance of impediment, or the related warning display, et cetera, relating to the moving or running of a moving body such as vehicle, and therefore they are not necessarily capable of responding sufficiently to a requirement for function of supporting a moving body to move positivelywhile securing a safety in the movement thereof by presenting clearly and directly a path per se which secures the safety relating to the moving or running of the moving body. Nor is there a cognizant technical problem brought up in supporting a moving or running positively by identifying and showing the most optimal route if there is a plurality of paths being figured out where a certain level of safety is presumably secured; nor is there naturally a technical concept put forth for responding to such a problem.

In consideration of such a situation as described above, a purpose of the present invention is to provide a safe movement support apparatus and the related method for accomplishing the function of supporting a moving body for moving positively while securing a safety in the movement by showing clearly and directly a path per se which has secured the safety relating to the moving or running of a moving body; and a further purpose is to provide a safe movement support apparatus and the related method for accomplishing the function of supporting a moving or running positively by identifying and showing the most optimal path from among a plurality of paths where the safety is presumably secured if they are so figured out.
[Patent document 1] Japanese Patent Publication No. 3153839; paragraphs 0001, 0005 and 0015;
[Patent document 2] Japanese Patent Publication No. 3324821; paragraph 0223;
[Patent document 3] Japanese patent laid-open application publication No. H07- 192199; paragraphs 0021 and 0160;
[Patent document 4] Japanese Patent Publication No. 3212235; paragraphs 0009 and 0055; and
[Patent document 5] Japanese patent laid-open application publication No. H10- 283593; paragraphs 0025 and 0048.

### Disclosure of Invention

A safe movement support apparatus according to a first aspect of the present invention comprises an environmental three-dimensional information acquisition unit for acquiring environmental three-dimensional information corresponding to a state of actual object within a virtual space surrounding a moving body or an assumed movement track relating the moving body with a prescribed finite expanse; a moving body state information acquisition unit for acquiring moving body state information relating to the moving body; and a safe movement-enabled space calculation unit for calculating a safe movement-enabled space which is a virtual space with a finite expanse in which the moving body is presumed to be safely movable, based on the environmental three dimensional information obtained from the environmental three-dimensional information acquisition unit and moving body state information obtained from the moving body state information acquisition unit.

Also, a safe movement support apparatus according to a second aspect of the present invention comprises an environmental three-dimensional information acquisition unit for acquiring environmental three-dimensional information corresponding to a state of actual object within a virtual space surrounding a moving body or an assumed movement track relating the moving body with a prescribed finite expanse; a texture acquisition unit for acquiring a texture relating to the virtual space; a moving body state information acquisition unit for acquiring moving body state information relating to a state of the moving body; and a safe movement-enabled space calculation unit for calculating a safe movement-enabled space which is a virtual space with a finite expanse in which the moving body is presumed to be safely movable, based on environmental three dimensional information obtained from the environmental three-dimensional information acquisition unit, moving body state information obtained from the moving body state information acquisition unit and a texture obtained from the texture acquisition unit.

Also, a safe movement support apparatus according to a third aspect of the present invention comprises an environmental three-dimensional information acquisition unit for acquiring environmental three-dimensional information corresponding to a state of actual object within a virtual space surrounding a moving body or an assumed movement track relating the moving body with a prescribed finite expanse; a texture acquisition unit for acquiring a texture relating to the virtual space; a moving body state information acquisition unit for acquiring moving body state information relating to a state of the moving body; a safe movement-enabled space calculation unit for calculating a safe movement-enabled space which is a virtual space with a finite expanse in which the moving body is presumed to be safely movable, based on environmental three dimensional information obtained from the environmental three-dimensional information acquisition unit, moving body state information obtained from the moving body state information acquisition unit and a texture obtained from the texture acquisition unit; and a stable movement path calculation unit for calculating a path on which the moving body is presumed to be stably movable based on the information indicating a safe movement-enabled space obtained from the safe movement-enabled space calculation unit and moving body state information obtained from the moving body state information acquisition unit.

And, a safe movement support apparatus according to a fourth aspect of the present invention comprises a moving body control unit, for controlling so as to enable the moving body to move along a path on which the moving body is presumed to be stably movable, that has been calculated by the stable movement path calculation unit in the above described third aspect.

Meanwhile, the present invention can comprise as a safe movement support method in lieu of being limited to the above described safe movement support apparatus.

### Brief Description of Drawings

The present invention will be more apparent from the following detailed description when the accompanying drawings are referenced.
Fig. 1 is a functional block diagram of safe movement support apparatus according to a first configuration of the present invention;
Fig. 2 is a flow chart exemplifying a processing relating to a calculation of safe movement-enabled space calculated by a safe movement-enabled space calculation unit comprised by the safe movement support apparatus according to the first configuration;
Fig. 3 shows image diagrams indicating aspects of progress in processing until a calculation of safe movement-enabled space which is calculated by the safe movement-enabled space calculation unit comprised by the safe movement support apparatus according to the first configuration;
Fig. 4 describes an example of environmental three-dimensional information at a desired later time which is calculated from plural pieces of environmental three-dimensional information that have been obtained in a time series;
Fig. 5 is a functional block diagram of safe movement support apparatus according to a second configuration of the present invention;
Fig. 6 is a flow chart exemplifying a processing relating to a calculation of safe movement-enabled space calculated by a safe movement-enabled space calculation unit comprised by the safe movement support apparatus according to the second configuration;
Fig. 7 shows image diagrams indicating aspects of progress in processing until a calculation of safe movement-enabled space which is calculated by the safe movement-enabled space calculation unit comprised by the safe movement support apparatus according to the second configuration;
Fig. 8 is a functional block diagram of safe movement support apparatus according to a third configuration of the present invention;
Fig. 9 is a functional block diagram of safe movement support apparatus according to a fourth configuration of the present invention;
Fig. 10 is a functional block diagram of safe movement support apparatus according to a fifth configuration of the present invention;
Fig. 11 is a functional block diagram of safe movement support apparatus according to a sixth configuration of the present invention;
Fig. 12 shows a concrete example of system when actually equipping the safe movement support apparatus according to the sixth configuration of the present invention aboard a vehicle;
Fig. 13 shows an example configuration of stereo camera; and
Fig. 14 exemplifies an equipment of stereo camera.

### Best Mode for Carrying Out the Invention

The following is a detailed description of the preferred embodiment of the present invention while referring to the accompanying drawings.

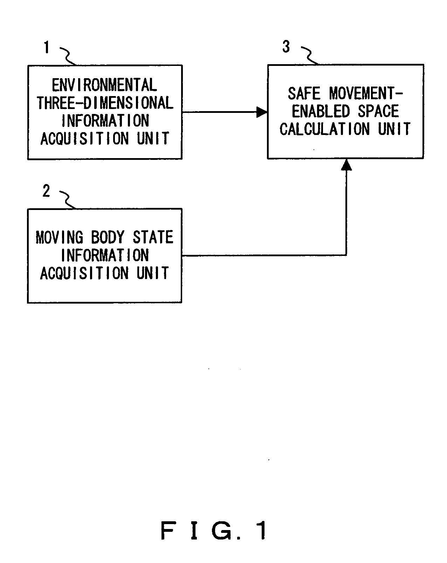

Fig. 1 is a functional block diagram of safe movement support apparatus according to a first configuration of the present invention.

The safe movement support apparatus shown by Fig. 1, comprising an environmental three-dimensional information acquisition unit 1, a moving body state information acquisition unit 2 and a safe movement-enabled space calculation unit 3, is an apparatus for supporting a vehicle or other moving body to move or run safely.

Note that the environmental three-dimensional information acquisition unit 1, moving body state information acquisition unit 2 and safe movement-enabled space calculation unit 3 may be either placed within a moving body as a subj ect of support (a "concerned moving body" hereinafter), or one or plurality of the aforementioned units may be equipped in the outside of the concerned moving body. That is, the safe movement support apparatus is applicable not only to the one mounted onto a concerned moving body such as a vehicle, but also to a system for carrying out an external recognition of moving body conditions,judgment of safety, necessary control, et cetera, such as a monitoring camera system, traffic control system, et cetera.

The environmental three-dimensional information acquisition unit 1 is for acquiring environmental three-dimensional information corresponding to a state of actual object within a virtual space surrounding a concerned moving body or an assumed movement track relating thereto with a prescribed finite expanse, configuring itself capable of obtaining the environmental three-dimensional information in a time series on as required basis.

Here, the environmental three-dimensional information acquisition unit 1 is configured to acquire the environmental three-dimensional information by using either one or plurality of systems, i.e., a Time of Flight system that laser or millimeter wave, etc. is used, system utilizing a stereo camera (including a multiple eye stereo camera), system by a Shape From Motion, system by a pattern projection method, or system utilizing GPS (Global Positioning System) and map information. For example, a use of system utilizing the GPS and map information enables an acquisition of environmental three-dimensional information such as a building from the map information based on the positional information obtained through the GPS.

Note that the acquired data may be of any format including a point group data, volume data (e.g., refer to "Computer Visualization", published by Kyoritsu Shuppan, Co., Ltd.; hereinafter called "reference document 1"), surface data (e.g., refer to the reference document 1).

The moving body state information acquisition unit 2 is configured to acquire moving body state information relating to a state of the concerned moving body, and enabled to acquire the moving body state information in a time series on an as required basis.

Here, the moving body state information is defined as either one or plurality of pieces of information about the concerned moving body in both dynamic category such as a position & attitude, speed, angular speed, strain of body, steering angle, acceleration, angular acceleration, driving power, braking power by such as brake, gear ratio of driving power transmission system, environmental temperature (e.g., temperatures in the inside and outside of concerned moving body) and humidity (e.g., humidity in the inside and outside of concerned moving body), remaining fuel quantity, remaining battery capacity; and static category such as a maximum torque, vehicle size (e.g., a total length, width and height, minimum ground clearance and antenna height), ground contact area size, weight, presence or absence of special function such as ABS (anti-lock braking system), and minimum turning radius. The above described static information may be stored in a memory.

The safe movement-enabled space calculating unit 3 is for calculating a safe movement-enabled space, i.e., a virtual space with a finite expanse in which the concerned moving body is presumed to be movable safely, based on the environmental three-dimensional information obtained from the environmental three-dimensional information acquisition unit 1 and moving body state information obtained from the moving body state information acquisition unit 2, comprising either one or plurality of units for calculating a movement-enabled plane, i.e., a projection, to a prescribed plane, of region in which the concerned moving body is enabled to move, for calculating a state on the movement-enabled plane, for calculating a region allowing the concerned moving body to exist from among the movement-enabled plane, and for predicting a transition in time with regard to at least either one among the movement-enabled plane, state on the movement-enabled plane and region allowing the concerned moving body to exist within the movement-enabled plane.

Here, let it describe a processing for calculating a safe movement-enabled space which is calculated by the safe movement-enabled space calculating unit 3 in further detail.

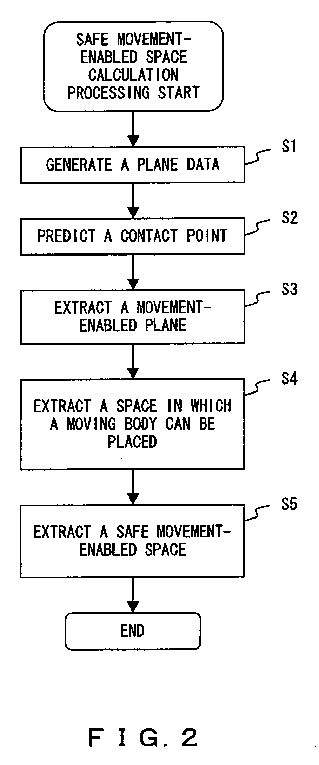

Fig. 2 is a flow chart exemplifying a processing relating to the calculating.

First, the safe movement-enabled space calculating unit 3 generates plane data based on the environmental three-dimensional information acquired by the environmental three-dimensional information acquisition unit 1 (S1) . Note that the plane data may either be expressed by a triangle patch, rectangle patch, et cetera, which is the surface of a body within a three-dimensional space being approximated by a large number of plane fragments, by an approximation by using a curvature function, or by using NURB, et cetera.

Next is to refer to the position & attitude, et cetera, of the concerned moving body based on the moving body state information obtained by the moving body state information acquisition unit 2, place the concerned moving body in coordinates of the above described environmental three-dimensional information and predict the current contact point with the concerned moving body (S2).

Next is to evaluate a continuity of surface by tracking the surface continuing from the predicted contact point (including flat or curved surfaces, or both) based on the plane data generated in S1 and contact point predicted in S2, and extract a movement-enabled plane where the concerned moving body is presumably movable to (S3). This calculates a movement-enabled plane that is a projection of the region, which the concerned moving body is movable to, to a prescribed plane.

Next is to refer to the size, et cetera, of the concerned moving body based on the above described moving body state information and extract a space in which the concerned moving body can be placed on the movement-enabled plane which has been extracted in S3 (S4). This calculates a region in which the concerned moving body can exist within a movement-enabled plane. In the S4, if the concerned moving body is a vehicle for example, a space relating to a tunnel or road where the concerned vehicle cannot pass will not be extracted.

The subsequent step is to refer to the above described moving body state information and extract a safe movement-enabled space in which the concernedmoving body is safely movable within the extracted space, in S4, in which the concerned moving body can be placed (S5) . In the step S5, processings are to refer to the above described moving body state information about the concerned moving body, e.g., position & attitude, speed, angular speed, strain of body, steering angle, acceleration, angular acceleration, driving power, braking power by such as brake, gear ratio of driving power transmission system, maximum torque, vehicle size such as minimum road clearance, weight, presence or absence of special function such as ABS, minimum turning radius, et cetera; calculate an angle of plane to allow a safe movement or running, a bump to allow a riding over, et cetera; judge and extract a safe movement-enabled space in which the concerned moving body is safely movable within the space in which the concerned moving body can be placed through a prescribed threshold value processing; and et cetera.

Through the above described processing shown by Fig. 2, the safe movement-enabled space calculating unit 3 calculates a safe movement-enabled space.

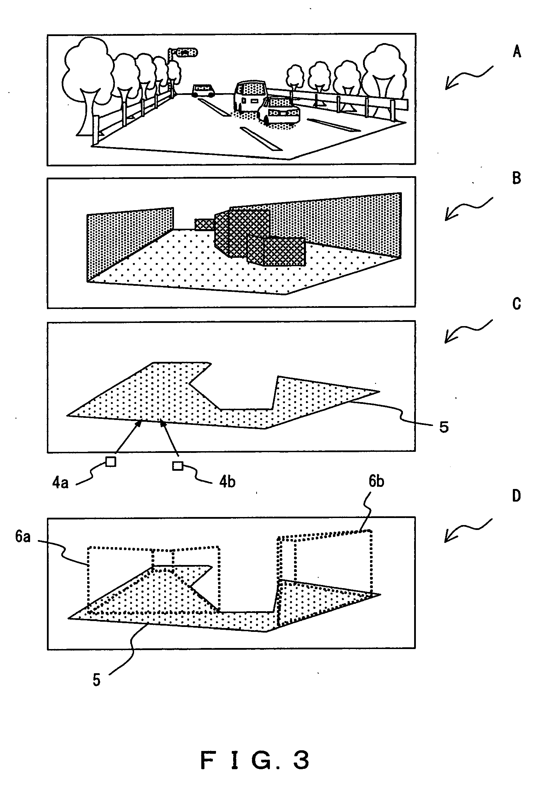

Fig. 3 shows image diagrams indicating aspects of progress in processing until an calculating of safe movement-enabled space which is calculated by the safe movement-enabled space calculating unit 3. Note that Fig. 3 exemplifies a case where a concerned moving body is a vehicle for which a safe movement-enabled space is calculated.

In Fig. 3, frame A shows environmental three-dimensional information acquired by the environmental three-dimensional information acquisition unit 1, that is, the environmental three-dimensional information corresponding to a state of actual object within a virtual space surrounding a concerned moving body or an assumed movement track relating thereto with a prescribed finite expanse.

The frame B shows a plane data generated in the above described step S1 based on the environmental three-dimensional information shown by the frame A.

The frame C shows the current contact points 4a and 4b with the concerned vehicle which has been predicted by the processing such as referring to a position & attitude, et cetera, of the concerned vehicle based on the moving body state information (i.e., state information relating to the concerned vehicle) acquired by the moving body state information acquisition unit 2, placing the concerned vehicle in the coordinates of the environmental three-dimensional information shown by the frame A, in the above described step S2; and a movement-enabled plane (drive-enabled plane) 5, where the concerned vehicle is presumably movable (i.e., drivable), which has been extracted by the processing such as tracking the plane continuing from the contact points 4a and 4b to evaluate a continuity of the plane based on the contact points 4a and 4b and the plane data shown by the frame B in the above described step S3, that is, the movement-enabled plane 5 which is the region allowing a movement of the concerned vehicle projected to a prescribed plane surface.

The frame D shows the spaces 6a and 6b in which the concerned vehicle can be placed on the movement-enabled plane 5 shown by the frame C, that is, the regions 6a and 6b in which the concerned vehicle can exist within the movement-enabled plane 5, which has been extracted by the processing such as referring to the size, et cetra, of the concerned vehicle based on the above described moving body state information in the above described step S4; and the space 6a, i.e., a safe movement-enabled space allowing the concerned vehicle to move safely, which has been extracted from the spaces 6a and 6b, where the concerned vehicle can be placed, by the processing such as referring to the above described moving body state information in the above described step S5.

As described above, the present embodiment is configured to calculate the safe movement-enabled space 6a allowing the concerned vehicle to move safely by carrying out the above described processing shown by Fig. 2.

And, if the safe movement-enabled space calculation unit 3 comprises the above described unit for predicting a transition in time with regard to at least either one among the movement-enabled plane, state on the movement-enabled plane and region allowing the concerned moving body to exist within the movement-enabled plane, it is possible to acquire predictively a future safe movement-enabled space allowing the concerned moving body to move safely.

In this case, the safe movement-enabled space calculating unit 3 is enabled to predictively calculate environmental three-dimensional information at a desired later time based on plural pieces of environmental three-dimensional information which have been obtained by the environmental three-dimensional information acquisition unit 1 in a time series, also predictively calculate moving body state information at a desired later time based on plural pieces of moving body state information which have been obtained by the moving body state information acquisition unit 2 in a time series, and predictively calculate a safe movement-enabled space at a desired later time through the above described processing shown by Fig. 2 based on the predictively calculated environmental three-dimensional information and moving body state information.

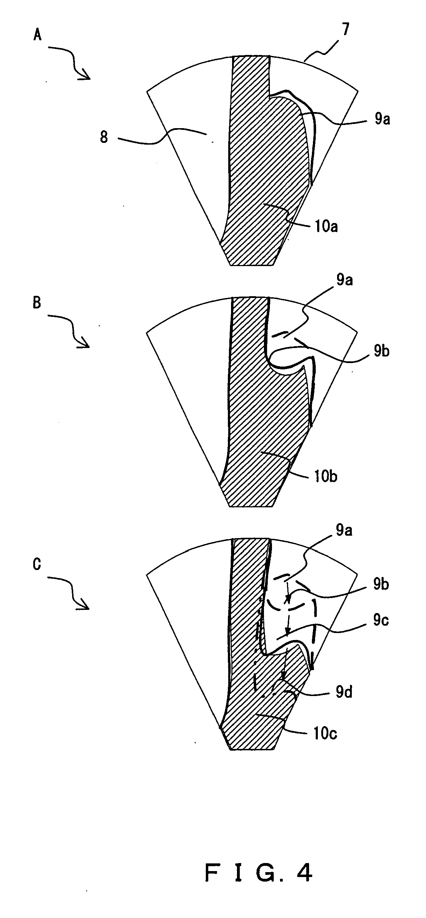

Fig. 4 describes an example of environmental three-dimensional information at a desired later time which is calculated from plural pieces of environmental three-dimensional information that have been obtained in a time series.

Referring to Fig. 4, a frame A is a horizontal sectional view of distance data based on environmental three-dimensional information obtained by the environmental three-dimensional information acquisition unit 1 at clock time T1, where the numerical 7 indicates the obtained range of environmental three-dimensional information, while the numerical 8 and 9a indicate the distance data at clock time T1.

Incidentally, the numerical 10a (i.e., shaded area of the frame A) shows a provisional movement-enabled plane if a movement-enabled region is calculated at the clock time T1 based on the environmental three-dimensional information obtained by the environmental three-dimensional information acquisition unit 1 and moving body state information obtained by the moving body state information acquisition unit 2.

The frame B is a horizontal sectional view of distance data based on environmental three-dimensional information obtained by the environmental three-dimensional information acquisition unit 1 at clock time T2 following T1, where the numerical 9b indicates the distance data at clock time T2.

Incidentally, the numerical 10b (i.e., shaded area of the frame-B) shows a provisional movement-enabled plane if a movement-enabled region is calculated at the clock time T2 based on the environmental three-dimensional information obtained by the environmental three-dimensional information acquisition unit 1 and moving body state information obtained by the moving body state information acquisition unit 2.

And the frame C is a horizontal sectional view of distance data based on environmental three-dimensional information obtained by the environmental three-dimensional information acquisition unit 1 at clock time T3 following T2, where the numerical 9c indicates the distance data at clock time T3. And the numerical 9d indicates the distance data for a future clock time T4 which has been predictively calculated from the distance data 9a, 9b and 9c at the clock times T1, T2 and T3, respectively.

As described above, the safe movement-enabled space calculating unit 3 is configured to calculate environmental three-dimensional information predictively at a future clock time T4 based on the respective pieces thereof at the clock times T1, T2 and T3 which have been obtained by the environmental three-dimensional information acquisition unit 1.

Incidentally, the numerical 10c (i.e., shaded area of the frame C) shows a provisional movement-enabled plane if a movement-enabled region is calculated at the clock time T3 based on the environmental three-dimensional information obtained by the environmental three-dimensional information acquisition unit 1 and moving body state information obtained by the moving body state information acquisition unit 2.

And the safe movement-enabled space calculating unit 3 likewise calculates moving body state information predictively at a future clock time T4 based on respective pieces thereof at the clock times T1, T2 and T3 which have been obtained by the moving body state information acquisition unit 2, and calculates a safe movement-enabled space based on the predicted environmental three-dimensional information and moving body state information, thereby making it possible to predict a safe movement-enabled space at a future clock time T4.

As described above, the safe movement support apparatus according to the first configuration is comprised to calculate a safe movement-enabled space, thereby enabling an acquisition of space securing a safety relating to a moving or running of moving body and a support for a moving body to move or run safely.

The next description is about a safe movement support apparatus according to a second configuration of the present invention.

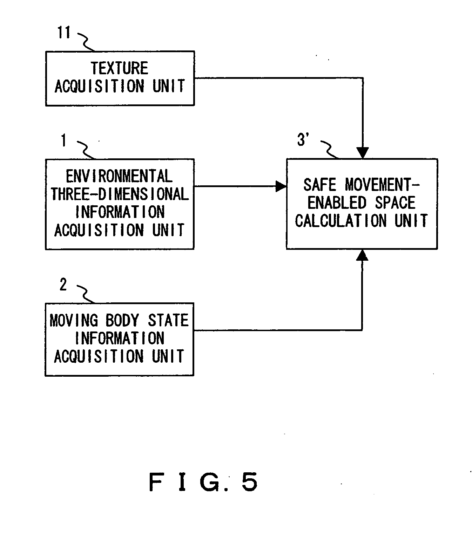

Fig. 5 is a functional block diagram of the safe movement support apparatus.

The safe movement support apparatus shown by Fig. 5, comprising an environmental three-dimensional information acquisition unit 1, a moving body state information acquisition unit 2, a texture acquisition unit 11 and a safe movement-enabled space calculating unit 3', is an apparatus for supporting a vehicle, et cetera, or another moving body to move or run more safely.

Note that the environmental three-dimensional information acquisition unit 1, moving body state information acquisition unit 2, texture acquisition unit 11 and safe movement-enabled space calculating unit 3' may be either placed within a moving body as a subject of support (a "concerned moving body" hereinafter), or one or plurality of the aforementioned units may be equipped in the outside of the concerned moving body. That is, the safe movement support apparatus is applicable not only to the one mounted onto a concerned moving body such as a vehicle, but also to a system for carrying out an external recognition of moving body conditions, judgment of safety, necessary control, et cetera, such as a monitoring camera system, traffic control system, et cetera, as with the safe movement support apparatus according to the first configuration.

Also note that the environmental three-dimensional information acquisition unit 1 and moving body state information acquisition unit 2 are the same as the ones shown by Fig. 1 and therefore descriptions are omitted here.

The texture acquisition unit 11 is disposed to acquire a texture relating to a virtual space surrounding a concerned moving body or an assumed movement track relating thereto with a prescribed finite expanse, and is configured to acquire data for expressing the texture in a time series on as required basis.

Here, the texture acquisition unit 11 may be configured to acquire the texture by using either one or plurality of devices, i.e., a visible light imaging device, infrared light imaging device, high sensitivity imaging device, or high dynamic range imaging device; or select one existing texture, which is judged to have the highest correlation with a screen image acquired by using the aforementioned devices, from among a plurality of candidates being lined up in advance.

The safe movement-enabled space calculation unit 3' , being disposed to calculate a safe movement-enabled space, i.e., a virtual space with a finite expanse in which the concerned moving body is presumably movable safely, based on environmental three-dimensional information obtained from the environmental three-dimensional information acquisition unit 1, moving body state information obtained from the moving body state information acquisition unit 2 and texture obtained from the texture acquisition unit 11, comprises either one or plurality of units for calculating a movement-enabled plane, i.e., a projection, to a prescribed plane, of region in which a concerned moving body is enabled to move, for calculating a state on the movement-enabled plane, for calculating a region allowing the concerned moving body to exist from among the movement-enabled plane, and for predicting a transition in time with regard to at least either one among the movement-enabled plane, state on the movement-enabled plane and region allowing the concerned moving body to exist within the movement-enabled plane as with the safe movement-enabled space calculating unit 3 shown by Fig. 1.

Here, let it describe a processing for calculating a safe movement-enabled space which is calculated by the safe movement-enabled space calculation unit 3' in further detail.

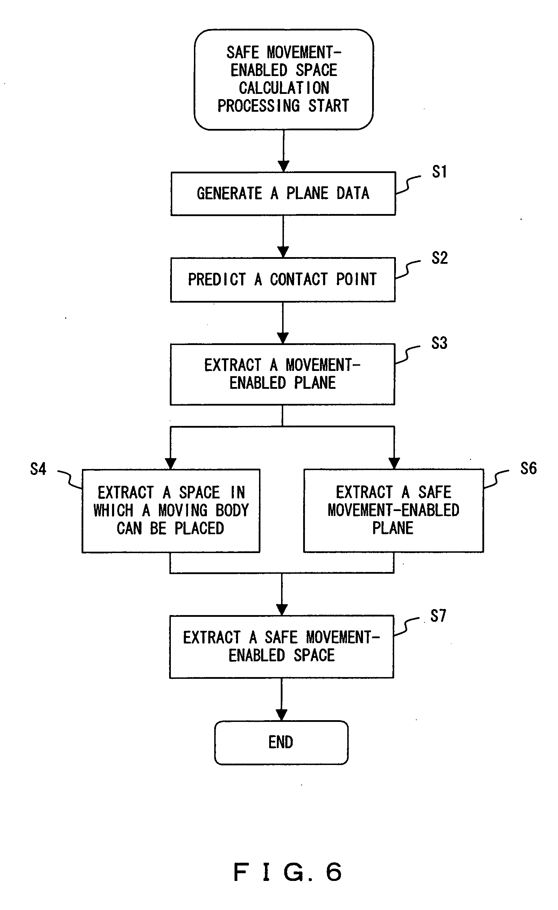

Fig. 6 is a flow chart exemplifying a processing relating to the calculation.

Referring to Fig. 6, the processing in the steps S1 through S4 are the same as the steps S1 through S4 shown by Fig. 2, and therefore a detailed description is omitted here.

The safe movement-enabled space calculation unit 3' generates a plane data based on environmental three-dimensional information (S1), predicts the current contact point with the concerned moving body (S2), extracts a movement-enabled plane where the concerned moving body is presumably movable (S3), followed by extracting a space in which the concerned moving body can be placed on the movement-enabled plane (S4) and extracting a safe movement-enabled plane where the concerned moving body is presumably movable safely on the movement-enabled plane (S6).

Here, the safe movement-enabled plane in step S6 is extracted by calculating a state on the movement-enabled plane (e.g., frozen, wet, material (such as asphalt, gravel, dirt, concrete) and temperature) from the movement-enabled plane which has been extracted in the step S3 and data for expressing a texture which has been obtained by the texture acquisition unit 11, through so called texture analysis (e.g., refer to the reference document 1), et cetera, and extracting a safe movement-enabled plane where the concernedmovingbody is presumably safelymovable within the movement-enabled plane.

Note that the processing in the steps S4 and S6 may be carried out either in parallel or series, and the sequence in the case of processing in series is not important.

Finishing the processing in the steps S4 and S6 is followed by extracting a safe movement-enabled space in which the concerned moving body is presumably movable safely from the moving body state information obtained from the moving body state information acquisition unit 2, the space allowing the concerned moving body to place, which has been extracted in the step S4, and the safe movement-enabled plane presumably allowing the concerned moving body to move safely, which has been extracted in the step S6 (S7).

Through the processing shown by Fig. 6, the safe movement-enabled space calculation unit 3' calculates a safe movement-enabled space.

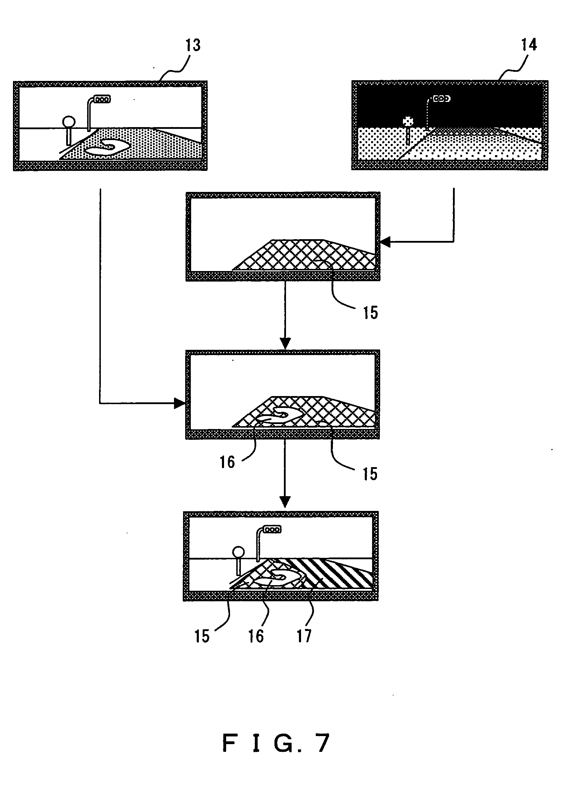

Fig. 7 shows image diagrams indicating aspects of progress in processing until a calculation of safe movement-enabled space which is calculated by the safe movement-enabled space calculation unit 3'. Note that Fig. 7 exemplifies the case of the concerned moving body being a vehicle for which a safe movement-enabled plane is calculated.

Referring to Fig. 7, the numerical 13 shows a data indicating a texture acquired by the texture acquisition unit 11.

The numerical 14 shows environmental three-dimensional information acquired by the environmental three-dimensional information acquisition unit 1.

The numerical 15 shows a movement-enabled plane (i.e., run-enabled plane) presumably allowing the concerned vehicle to move (i.e., run), which has been extracted through the processing in the above described steps S1 through S3 based on the environmental three-dimensional information 14.

The numerical 16 shows a frozen region, i.e., a state on the movement-enabled plane 15, which has been acquired based on the movement-enabled plane 15 and data 13 indicating the texture through the processing in the step S6.

The numerical 17 shows a safe movement-enabled plane presumably allowing the concerned vehicle to move safely within the movement-enabled plane 15, which has been extracted as a result of the above described processing in step S6.

As such, according to the present embodiment the above described processing shown by Fig. 6 calculates a safe movement-enabled plane presumably allowing the concerned vehicle to move safely, thereby making it possible to extract a safe movement-enabled space allowing the concerned vehicle to move safely based on the safe movement-enabled plane 17, moving body state information (i.e., information about the state of the concerned vehicle) obtained from the moving body state information acquisition unit 2 and space extracted by the processing in the above described step S4 allowing the concerned vehicle to place.

Meanwhile, if the safe movement-enabled space calculation unit 3' comprises a unit for predicting a transition in time with regard to at least either one among the movement-enabled plane, state on the movement-enabled plane and region allowing the concerned moving body to exist within the movement-enabled plane, it is possible to calculate predictively a future safe movement-enabled space allowing the concerned moving body to move safely.

In such a case, the safe movement-enabled space calculation unit 3' is enabled to predictively calculate environmental three-dimensional information at a desired later time based on plural pieces of environmental three-dimensional information which have been obtained by the environmental three-dimensional information acquisition unit 1 in a time series, also predictively calculate moving body state information at a desired later time based on plural pieces of moving body state information which have been obtained by the moving body state information acquisition unit 2 in a time series, also predictively calculate data indicating a texture at a desired later time based on plural pieces of data indicating textures which have been obtained by the texture acquisition unit 11 in a time series, thereby capable of predictively calculating a safe movement-enabled space at a desired later time through the above described processing shown by Fig. 6 based on the predictively calculated environmental three-dimensional information, moving body state information and texture.

As described so far, the safe movement support apparatus according to the second configuration is comprised to further take a state of movement-enabled plane or run-enabled plane for a moving body into consideration, thereby enabling an acquisition of space securing an improved safety with regard to moving or running a moving body and a support for moving or running the moving body more safely.

The next description is about a safe movement support apparatus according to a third configuration of the present invention.

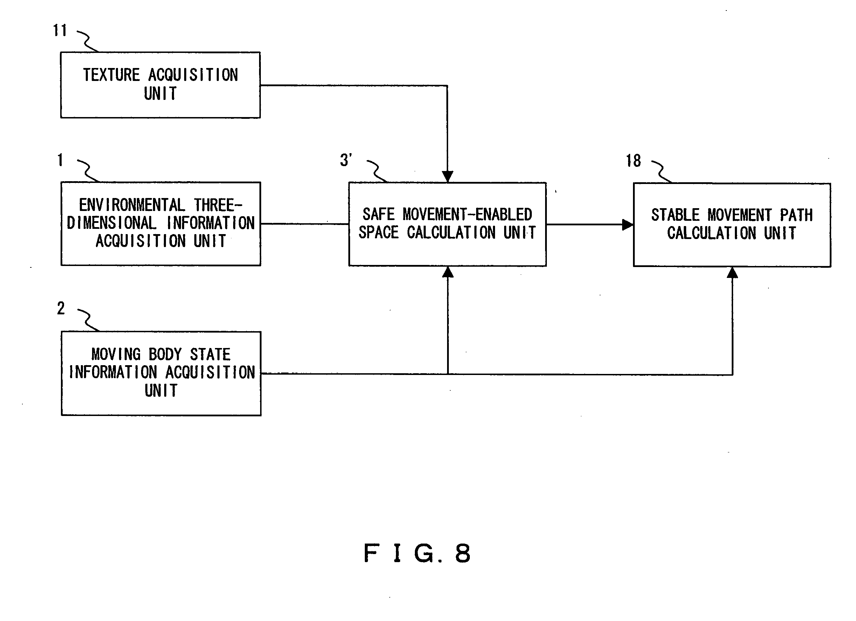

Fig. 8 is a functional block diagram of the safe movement support apparatus.

The safe movement support apparatus shown by Fig. 8 is the above described one shown by Fig. 5 further comprising a stable movement path calculation unit 18.

Note that the environmental three-dimensional information acquisition unit 1, moving body state information acquisition unit 2, texture acquisition unit 11, safe movement-enabled space calculation unit 3' and stable movement path calculation unit 18 may be placed on the inside of a moving body as a subject of support (a "concerned moving body" hereinafter), or one or plurality of the aforementioned units may be placed in the outside of the concerned moving body.

The environmental three-dimensional information acquisition unit 1, moving body state information acquisition unit 2, texture acquisition unit 11 and safe movement-enabled space calculation unit 3' are the same as those shown by Fig. 5, respectively, and therefore the descriptions will be omitted here.

The stable movement path calculation unit 18 is configured to calculate a path presumably allowing the concerned moving body to move stably based on the information indicating a safe movement-enabled space obtained from the safe movement-enabled space calculation unit 3' and moving body state information obtained from the moving body state information acquisition unit 2.

For example, the stable movement path calculation unit 18 refers to a speed, acceleration, angular acceleration, size, et cetera, of the moving body state information, and searches the most optimal path under a prescribed criterion from among the calculated one or plurality of safe movement-enabled spaces, thereby calculating a path presumably allowing the concerned moving body to move stably.

Here, the prescribed criterion includes an integral of acceleration or angular acceleration along a path being the minimum, the minimum distance between the concerned moving body and border of a safe movement-enabled space being the maximum (i.e., away from an obstacle as much as possible), the irregularity of movement-enabled plane being small, et cetera.

Note that these criteria for optimization may be applied by criterion conventionally formularized mathematically and commonly used.

The safe movement support apparatus according to the third configuration thusly is comprised to acquire the most optimal path, if a plurality of safe movement-enabled spaces are calculated, that is, a plurality of paths presumably securing a certain level of safety are calculated.

The next description is about a safe movement support apparatus according to a fourth configuration of the present invention.

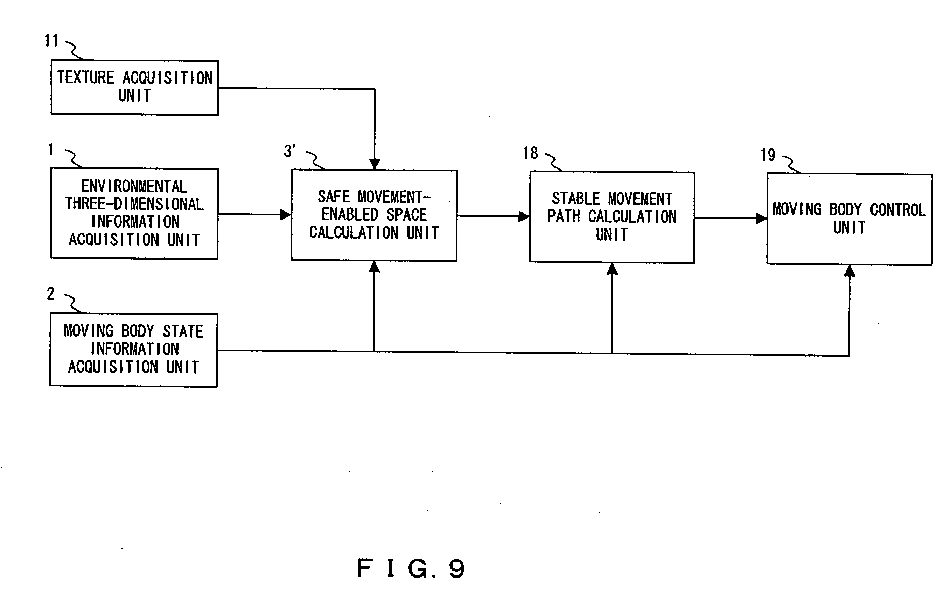

Fig. 9 is a functional block diagram of the safe movement support apparatus.

The safe movement support apparatus shown by Fig. 9 is the above described one shown by Fig. 8 further comprising a moving body control unit 19.

The environmental three-dimensional information acquisition unit 1, moving body state information acquisition unit 2, texture acquisition unit 11, safe movement-enabled space calculation unit 3' and stable movement path calculation unit 18 are the same as those shown by Fig. 8 and therefore the descriptions will be omitted here.

The moving body control unit 19 is configured to control the concerned moving body so as to move along the path, which has been calculated by the stable movement path calculation unit 18, presumably allowing the concerned moving body to move stably. The control here is such that the concerned moving body is able to move along the path calculated by the stable movement path calculation unit 18 while referring to the moving body state information acquired by the moving body state information acquisition unit 2 as feedback information.

Incidentally, various methods have conventionally been proposed for controlling a moving body to move along a prescribed path.

The safe movement support apparatus according to the fourth configuration thusly is comprised to be capable of supporting a moving body to move positively while securing a safety.

The next description is about a safe movement support apparatus according to a fifth configuration of the present invention.

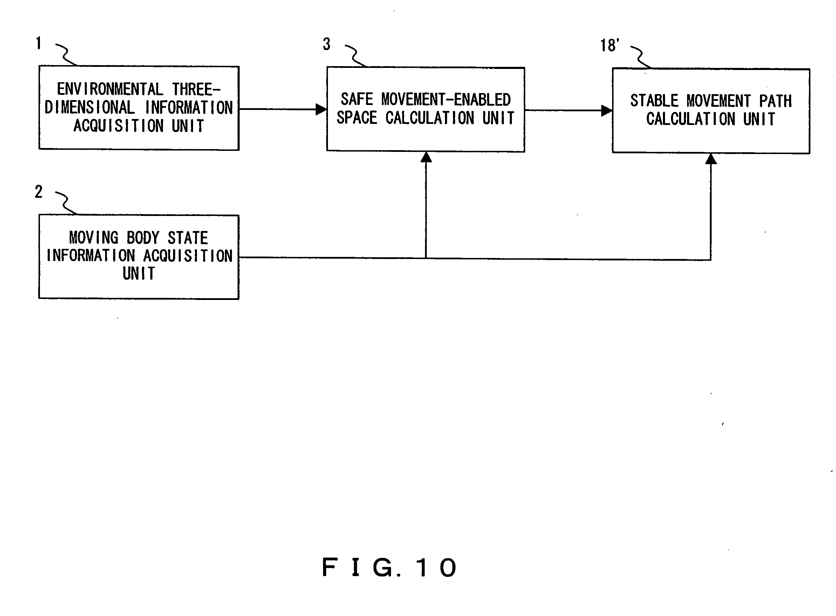

Fig. 10 is a functional block diagram of the safe movement support apparatus.

The safe movement support apparatus shown by Fig. 10 is the above described one shown by Fig. 1 further comprising a stable movement path calculation unit 18'.

Note that the environmental three-dimensional information acquisition unit 1, moving body state information acquisition unit 2, safe movement-enabled space calculation unit 3 and stable movement path calculation unit 18' may be placed on the inside of a moving body as a subject of support (a "concerned moving body" hereinafter), or one or plurality of the aforementioned units may be placed in the outside of the concerned moving body.

The environmental three-dimensional information acquisition unit 1, moving body state information acquisition unit 2 and safe movement-enabled space calculation unit 3 are the same as those shown by Fig. 1 and therefore the descriptions will be omitted here.

The stable movement path calculation unit 18' is configured to calculate a path presumably allowing the concerned moving body to move stably based on the information indicating a safe movement-enabled space obtained from the safe movement-enabled space calculation unit 3 and moving body state information obtained from the moving body state information acquisition unit 2, and carry out other functions the same as the above described stable movement path calculation unit 18 (e.g., refer to Fig. 8).

The safe movement support apparatus according to the fifth configuration thusly is configured to be capable of gaining the same effect as the one according to the above described third configuration.

The next description is about a safe movement support apparatus according to a sixth configuration of the present invention.

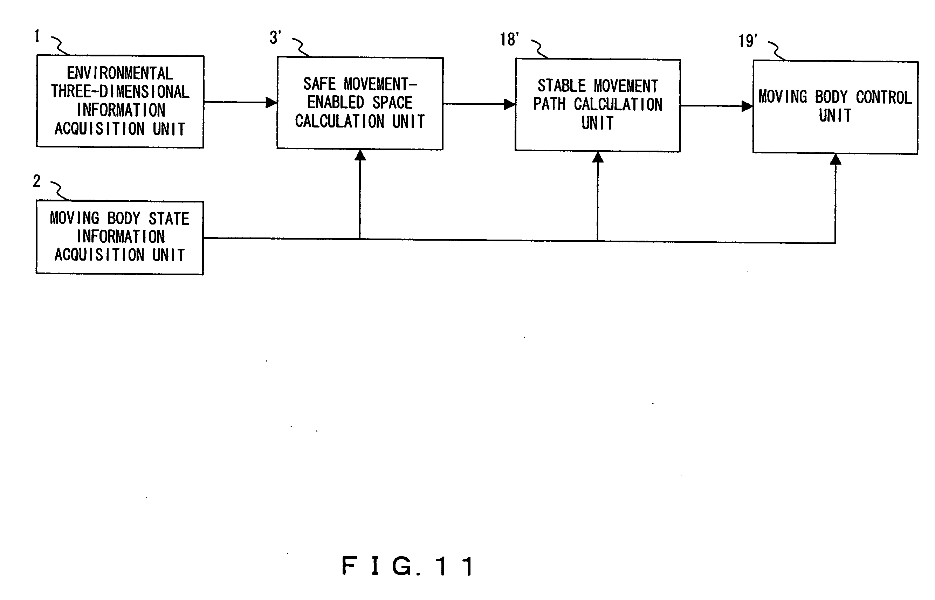

Fig. 11 is a functional block diagram of the safe movement support apparatus.

The safe movement support apparatus shown by Fig. 11 is the above described one shown by Fig. 10 further comprising a moving body control unit 19'.

The environmental three-dimensional information acquisition unit 1, moving body state information acquisition unit 2, safe movement-enabled space calculation unit 3 and stable movement path calculation unit 18' are the same as those shown by Fig. 10 and therefore the descriptions will be omitted here.

The moving body control unit 19' is configured to control the concerned moving body so as to move along the path, which has been calculated by the stable movement path calculation unit 18', presumably allowing the concerned moving body to move stably, and have other function the same as the above described moving body control unit 19 (refer to Fig. 9).

The safe movement support apparatus according to the sixth configuration thusly is comprised to be capable of gaining the same effect as the one according to the above described fourth configuration.

Here, the description is about a concrete example of system when equipping a safe movement support apparatus according to the fifth configuration (which are also the first and fourth configurations) aboard an actual vehicle.

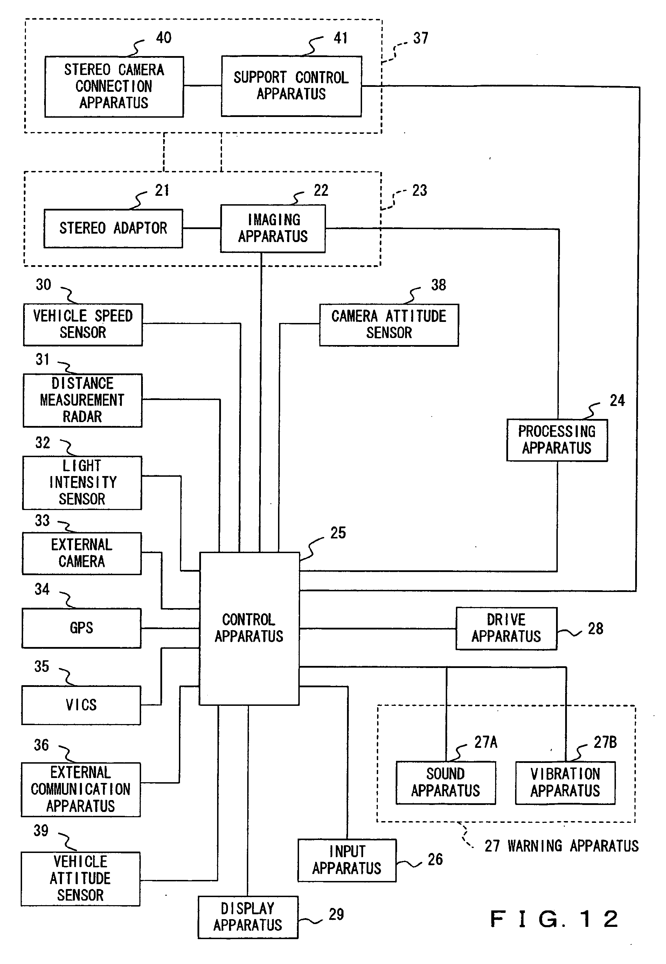

Fig. 12 shows a comprisal of such a system.

This system comprises a stereo camera 23 including a later described stereo adaptor 21 and imaging apparatus 22, a processing apparatus 24, a control apparatus 25, an input apparatus 26, a warning apparatus 27, a drive apparatus 28, a display apparatus 29, a vehicle speed sensor 30, a distance measurement radar 31, a light intensity sensor 32, an external camera 33, a GPS 34, a VICS 35, an external communication apparatus 36, a stereo camera support apparatus 37, a camera attitude sensor 38, and a vehicle attitude sensor 39. The VICS is an abbreviation for the Vehicle Information and Communication System which is a system for transmitting road traffic information such as traffic congestion and traffic control which have been edited and processed in the VICS Center and displaying by means of onboard equipment such as a car navigation by a character and image. Meanwhile, the stereo camera support apparatus 37 is equipped by a stereo camera connection apparatus 40 and support control apparatus 41.

Note here that the stereo camera 23 and processing apparatus 24 constitute the comprisal corresponding to the environmental three-dimensional information acquisition unit 1, while the vehicle speed sensor 30, the distancemeasurement radar 31, light intensity sensor 32, vehicle attitude sensor 39 and control apparatus 25 constitute the comprisal corresponding to the moving body state information acquisition unit 2. And the control apparatus 25 constitutes also the comprisal corresponding to the safe movement-enabled space calculation unit 3, stable movement path calculation unit 18' and moving body control unit 19'.

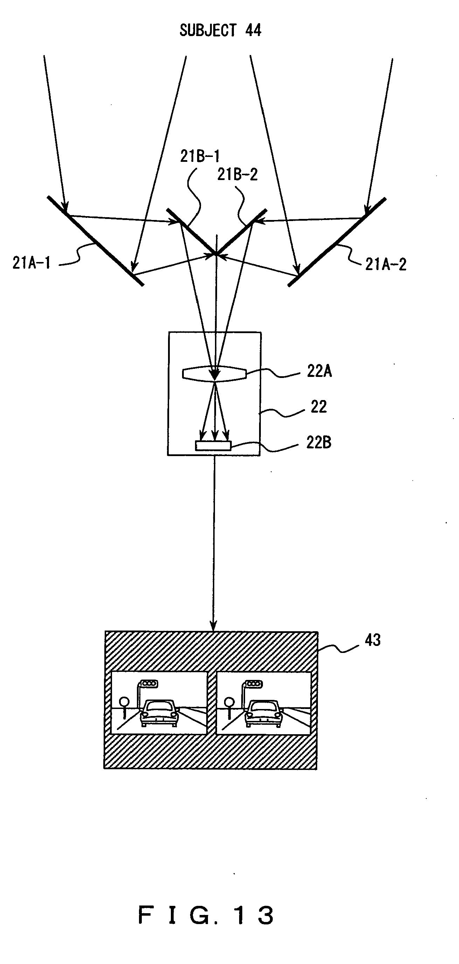

The stereo adaptor 21, being mounted in front of imaging optical system 22A within the imaging apparatus 22 such as a camera, is used for forming a parallax image 43 on an imaging element 22B and equipped by an optical system (i.e., mirrors 21B-1 and 21B-2) leading each of the received light to the imaging optical system 22A of the imaging apparatus 22 by receiving light from the same subject 44 through two light receiving units (i.e., mirrors 21A-1 and 21A-2) which are separated by a predetermined distance from each other' s units, as shown by Fig. 13.

The stereo camera 23 comprising the stereo adaptor 21 and imaging apparatus 22 (or the processing apparatus 24 in addition thereto) is configured to enable photographing in various directions while being supported by the stereo camera support apparatus 37.

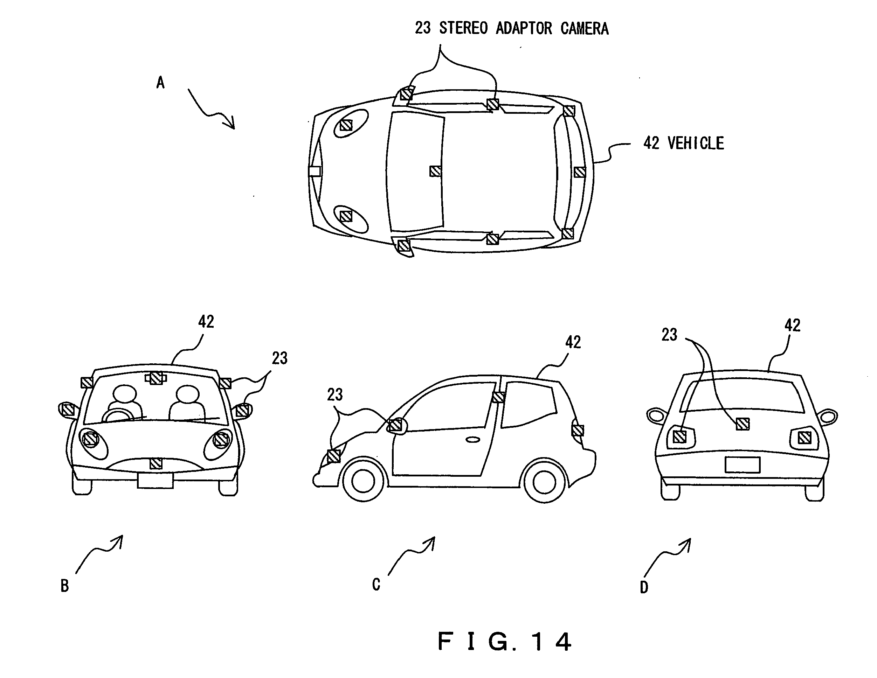

The stereo camera 23 can be mounted onto the discretionary places (i.e., shaded areas) on the inside and outside of vehicle 42 as shown by the illustrations A, B, C and D shown by Fig. 14. In the case of equipping it on the outside of the vehicle 42, an equipping on the hood, pillar, headlight, et cetera, thus enabling imaging scenery on the outside of the vehicle, is possible. Also, equipping the stereo camera 23 in the case of equipping on the inside of the vehicle 42, and equipping on the dashboard, rearview mirror, et cetera, is possible.

The processing apparatus 24 carries out a three-dimensional reconstruction, et cetera, based on an image photographed by the imaging apparatus 22 through the stereo adaptor 21 and thus acquires environmental three-dimensional information.

The control apparatus 25, comprising internally such as a CPU (central processing unit) and a memory storing a control program, specification data, et cetera, relating to the concerned vehicle, is for controlling the entirety of the present system by the CPU reading out the control program and executing it.

The control apparatus 25 carries out the processing such as processing in the above described steps S1 through S5, that is, extracting a safe movement-enabled space allowing the concerned vehicle to move safely, from the environmental three-dimensional information obtained from the stereo camera 23 and processing apparatus 24, and the state information about the concerned vehicle (i.e., moving body state information) such as the speed detected by the vehicle speed sensor 30, position & attitude of the concerned vehicle detected by the vehicle attitude sensor 39 and size data of the concerned vehicle available form the above described specification data; followed by calculating a path presumably allowing the concerned vehicle to move stably based on the information indicating the safe movement-enabled space and the aforementioned state information about the concerned vehicle; followed by controlling the drive apparatus 28 so that the concerned vehicle can move along the path, et cetera. Also the comprisal is such that the extracted safe movement-enabled space and/or the calculated path can be displayed in the display apparatus 29 on as required basis in this event. The control apparatus 25 is also capable of letting the warning apparatus 27 initiate an alarm and/or controlling the drive apparatus 28 so as to urge the driver to drive safely as a result of analyzing the distance information based on the above described environmental three-dimensional information and information relating to the speed of the concerned vehicle which has been detected by the above described vehicle speed sensor 30, as needs arise. Here, the warning apparatus 27 is for warning the driver, including a sound apparatus 27A and a vibration apparatus 27B, the former by way of a sound from a speaker, et cetera, while the latter by way of a vibration in the driver seat.

And the input apparatus 2 6 is capable of instructing the control apparatus 25 by using input equipment such as a remote controller, thereby changing modes, et cetera.

And the stereo camera connection apparatus 40 constituting the stereo camera support apparatus 37 combines the stereo camera 23 with, and supports it onto, the vehicle 42. Meanwhile, the support control apparatus 41 constituting the stereo camera support apparatus 37 outputs a signal to the stereo camera connection apparatus 40 in order to control a photographing direction of the stereo camera 23.

And vehicle attitude sensor 39 detects an attitude or position of the vehicle as described above and an inclination thereof vis-à-vis the road. And the support control apparatus 41 controls an imaging range of the stereo camera 23, that is, as to where the field of vision for imaging is to be decided based on the value detected by the vehicle attitude sensor 39, image information processed by the processing apparatus 24 and information from the GPS 34. That is, if an imaging field of vision is displaced from the right range due to an inclination of the vehicle, a control signal is outputted to the stereo camera connection apparatus 40 for urging to correct the imaging field of vision to the right range. In this event, the support control apparatus 41 figures out the current state of camera based on the output value detected by the camera attitude sensor 38, i.e., sensor for detecting an attitude or position of camera, and generates a control signal. Then the stereo camera connection apparatus 40 drives a built-in adjustment mechanism to set the stereo camera 23 to a desired direction based on the control signal.

Incidentally, the various information and detection signals necessary for the above described control are inputted to the support control apparatus 41 by way of the control apparatus 25. Note, however, that an embodiment is not limited as such, but a configuration may be such that the support control apparatus 41 receives directly the various information and detection signals necessary for the control, or alternatively the control apparatus 25 and support control apparatus 41 share such functions suitably so as to receive various information and detection signals necessary for the control, respectively.

Meanwhile, in the present system, a comprisal corresponding to the environmental three-dimensional information acquisition unit 1 may be placed so as to acquire environmental three-dimensional information about a moving body in a relative motion, i.e., moving toward, or away from, the stationary comprisal on a horizontal plane, a lá monitor camera. Alternatively, either one or plurality of comprisals corresponding to the environmental three-dimensional information acquisition unit 1, moving body state information acquisition unit 2 and safe movement-enabled space calculation unit 3 may be configured to equip in the outside of vehicle, in which case a data exchange with the components equipped in the outside thereof will be carried out by way of the external communication apparatus 36.

While the detailed description has been given to the safe movement support apparatus and the related method according to the present invention, the above described embodiments in no way limit the present invention, and moreover, it goes without saying that various improvements and changes are possible within the scope of the present invention.

The present invention is capable of providing a safe movement support apparatus and the related method for accomplishing the function of supporting a moving body for moving positively while securing a safety in the movement by showing clearly and directly a path per se which has secured the safety relating to a moving or driving a moving body; and capable of providing a safe movement support apparatus and the related method

## Claims

1. A safe movement support apparatus, comprising:
an environmental three-dimensional information acquisition unit for acquiring environmental three-dimensional information corresponding to a state of actual object within a virtual space surrounding a moving body or an assumed movement track relating the moving body with a prescribed finite expanse;
a moving body state information acquisition unit for acquiring moving body state information relating to the moving body; and
a safe movement-enabled space calculation unit for calculating a safe movement-enabled space which is a virtual space with a finite expanse in which the moving body is presumed to be movable safely, based on the environmental three-dimensional information obtained from the environmental three-dimensional information acquisition unit and moving body state information obtained from the moving body state information acquisition unit.

2. A safe movement support apparatus, comprising:
an environmental three-dimensional information acquisition unit for acquiring environmental three-dimensional information corresponding to a state of actual object within a virtual space surrounding a moving body or an assumed movement track relating the moving body with a prescribed finite expanse;
a texture acquisition unit for acquiring a texture relating to the virtual space;
a moving body state information acquisition unit for acquiring moving body state information relating to a state of the moving body; and
a safe movement-enabled space calculation unit for calculating a safe movement-enabled space which is a virtual space with a finite expanse in which the moving body is presumed to be movable safely, based on environmental three dimensional information obtained from the environmental three-dimensional information acquisition unit, moving body state information obtained from the moving body state information acquisition unit and a texture obtained from the texture acquisition unit.

3. A safe movement support apparatus, comprising:
an environmental three-dimensional information acquisition unit for acquiring environmental three-dimensional information corresponding to a state of actual object within a virtual space surrounding a moving body or an assumed movement track relating the moving body with a prescribed finite expanse;
a texture acquisition unit for acquiring a texture relating to the virtual space;
a moving body state information acquisition unit for acquiring moving body state information relating to a state of the moving body;
a safe movement-enabled space calculation unit for calculating a safe movement-enabled space which is a virtual space with a finite expanse in which the moving body is presumed to be movable safely, based on environmental three dimensional information obtained from the environmental three-dimensional information acquisition unit, moving body state information obtained from the moving body state information acquisition unit and a texture obtained from the texture acquisition unit; and
a stable movement path calculation unit for calculating a path on which the moving body is presumed to be movable stably based on the information indicating a safe movement-enabled space obtained from the safe movement-enabled space calculation unit and moving body state information obtained from the moving body state information acquisition unit.

4. The safe movement support apparatus according to claim 3, further comprising
a moving body control unit for controlling so as to enable the moving body to move along a path on which the moving body is presumed to be stably movable and that has been calculated by the stable movement path calculation unit.

5. The safe movement support apparatus according to claim 2, wherein
the texture acquisition unit is configured to acquire plural pieces of data indicating textures in a time series.

6. The safe movement support apparatus according to claim 2, wherein
the texture acquisition unit is configured to acquire a texture by using either one or plurality of devices such as a visible light imaging device, infrared light imaging device, high sensitivity imaging device, or high dynamic range imaging device.

7. The safe movement support apparatus according to claim 1, wherein
the environmental three-dimensional information acquisition unit is configured to acquire plural pieces of environmental three-dimensional information in a time series.

8. The safe movement support apparatus according to claim 1, wherein
the environmental three-dimensional information acquisition unit is configured to acquire the environmental three-dimensional information by using either one or plurality of systems such as a Time of Flight system, system utilizing a stereo camera, system by a Shape From Motion, system by a pattern projection method, or system utilizing GPS and map information.

9. The safe movement support apparatus according to claim 1, wherein
the moving body state information acquisition unit is configured to acquire plural pieces of the moving body state information in a time series.

10. The safe movement support apparatus according to claim 1, wherein
the moving body state information acquisition unit is configured to acquire the moving body state information relating to either one or plurality of information, such as a position & attitude, speed, angular speed, strain of body, steering angle, acceleration, angular acceleration, driving power, braking power, gear ratio of driving power transmission system, environmental temperature and humidity, remaining fuel quantity, remaining battery capacity, maximum torque, vehicle size and weight, presence or absence of special function, and minimum turning radius, about the moving body.

11. The safe movement support apparatus according to claim 1, wherein
the safe movement-enabled space calculation unit comprises either one or plurality of units such as the one for calculating a movement-enabled plane, which is a projection to a prescribed plane, of region in which the moving body is enabled to move, the one for calculating a state on the movement-enabled plane, the one for calculating a region allowing the moving body to exist from among the movement-enabled plane, or the one for predicting a transition in time with regard to at least either one among the movement-enabled plane, a state on the movement-enabled plane and a region allowing the moving body to exist within the movement-enabled plane.

12. The safe movement support apparatus according to claim 1, wherein
a vehicle is applicable to the moving body.

13. The safe movement support apparatus according to claim 1, wherein
either one or plurality among the environmental three-dimensional information acquisition unit, moving body state information acquisition unit and safe movement-enabled space calculation unit are equipped on the outside of the moving body.

14. The safe movement support apparatus according to claim 2, wherein
either one or plurality among the environmental three-dimensional information acquisition unit, texture acquisition unit, moving body state information acquisition unit and safe movement-enabled space calculation unit are equipped in the outside of the moving body.

15. The safe movement support apparatus according to claim 3, wherein
either one or plurality among the environmental three-dimensional information acquisition unit, texture acquisition unit, moving body state information acquisition unit, safe movement-enabled space calculation unit and stable movement path calculation unit are equipped in the outside of the moving body.

16. A safe movement support method, comprising the processes of
obtaining environmental three-dimensional information corresponding to a state of actual object within a virtual space surrounding a moving body or an assumed movement track relating the moving body with a prescribed finite expanse and moving body state information relating to a state of the moving body; and
calculating a safe movement-enabled space which is a virtual space with a finite expanse in which the moving body is presumed to be safely movable, based on the environmental three dimensional information and moving body state information.

17. A safe movement support method, comprising the processes of
obtaining environmental three-dimensional information corresponding to a state of actual object within a virtual space surrounding a moving body or an assumed movement track relating the moving body with a prescribed finite expanse, a texture relating to the virtual space, andmovingbody state information relating to a state of the moving body; and
calculating a safe movement-enabled space which is a virtual space with a finite expanse in which the moving body is presumed to be movable safely, based on the environmental three dimensional information, moving body state information and texture.

18. A safe movement support method, comprising the processes of
obtaining environmental three-dimensional information corresponding to a state of actual object within a virtual space surrounding a moving body or an assumed movement track relating the moving body with a prescribed finite expanse, a texture relating to the virtual space, and moving body state information relating to a state of the moving body;
calculating a safe movement-enabled space which is a virtual space with a finite expanse in which the moving body is presumed to be safely movable, based on the environmental three dimensional information, moving body state information and texture; and
calculating a path on which the moving body is presumed to be stably movable based on the information indicating a safe movement-enabled space and moving body state information.

19. The safe movement support method according to claim 18, further comprising the process of controlling so as to enable the moving body to move along the path.
